# EUROPEAN PATENT APPLICATION

(11) **EP 1 117 244 A1**
(43) Date of publication of application: **18.07.2001**
(21) Application number: 00650204.1
(22) Date of filing: 07.12.2000
(51) Int. Cl.: H04M 7/00, H04L 29/06

(54) **Display of information from a Web application on a called party's telephone**

(30) Priority: 29.12.1999 US 474078
(71) Applicant: Nortel Networks Limited, Montreal, Quebec H2Y 3Y4 (CA)
(72) Inventor: Will, Craig Alexander, Fremont, CA 94536 (US); Hopper, Ian D., Sunnyvale, CA 94086-6772 (US)
(74) Representative: Coyle, Philip Aidan

(57) **Abstract**

A method and system is provided for displaying information from a Web application on a receiving-end telephone station. Methods and systems consistent with the present invention enable communication among two or more telephone stations by initiating a telephone call from a first telephone station to a second telephone station and retrieving information from a computer system. Such systems and methods display the information on the first telephone station and transmit data corresponding to the information to the second telephone station. Information corresponding to the retrieved information is then displayed on the second telephone station.

## Description

### BACKGROUND OF THE INVENTION

### A. Field of the Invention

The present invention relates generally to communications. More particularly, the'invention relates to the display of Web applications on telephone stations.

### B. Description of the Related Art

The World Wide Web (the Web) has become an important tool for accessing information and doing business all over the world. When two or more individuals engage in a telephone conversation and one of the individuals desires to make reference to information from the Web during the conversation period (e.g., stock quotes found in a certain Web site), each of the individuals would need to have a personal computer running a Web browser in order to access the information. This presents the inconvenience of having to orally communicate the Web site address in which the information is to be accessed. Moreover, if the person that first points out the reference has book marked a sequence of Web sites in anticipation of the conversation, the process of dictating the sequence of addresses to the other individuals becomes even more tedious.

Furthermore, in the event that some of the individuals do not have possession of a personal computer, the individual referencing the information would have to read the information from his computer screen to those individuals. Therefore, there is a need in the art for a system that allows the display of information accessed from a Web application on the screen of a receiving-end, telephone station.

### SUMMARY OF THE INVENTION

Accordingly, it is an objective of the present invention to meet the foregoing needs by providing systems and methods for displaying information from a Web application on a receiving-end telephone station, and by providing a computer program stored on a computer readable storage medium for carrying out the method.

Methods and systems consistent with the present invention enable communication among two or more telephone stations. The communication is enabled by initiating a telephone call from a first telephone station to a second telephone station and by retrieving information from a computer system. Such systems and methods display the information on the first telephone station and transmit data corresponding to the information to the second telephone station. Information corresponding to the retrieved information is then displayed on the second telephone station.

Both the foregoing general description and the following detailed description provide examples and explanations only. They do not restrict the claimed invention.

### DESCRIPTION OF THE DRAWINGS

The accompanying drawings, which are incorporated in and constitute a part of this specification, illustrate embodiments of the invention and, together with the description, explain the advantages and principles of the invention.

FIG. I illustrates one embodiment of the present invention for displaying information from a Web application on a receiver-end telephone, in accordance with methods and systems consistent with the present invention; and

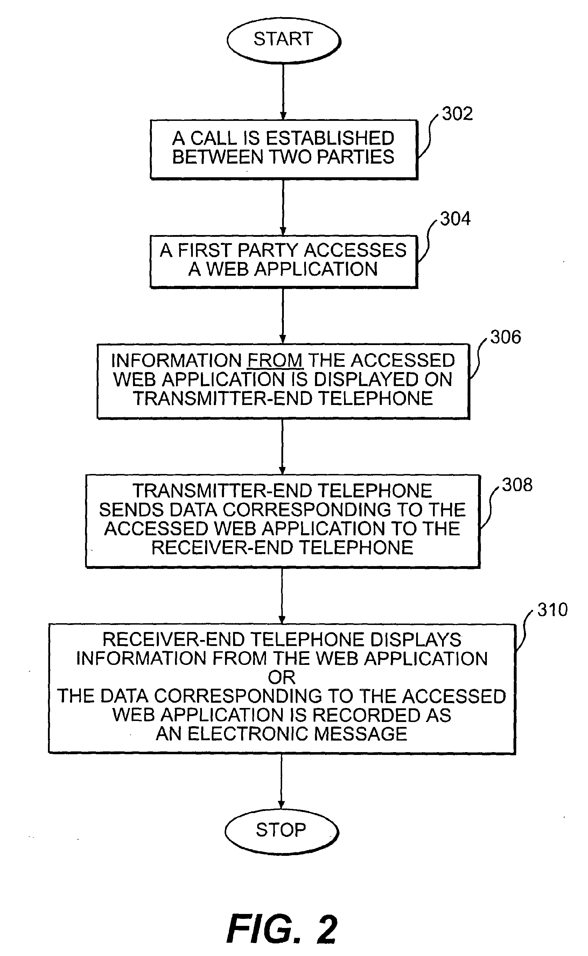

FIG. 2 illustrates a flowchart containing steps for displaying information from a Web application on a receiver-end telephone in accordance with methods and systems consistent with the present invention.

### DETAILED DESCRIPTION

Reference will now be made to preferred embodiments of this invention, examples of which are shown in the accompanying drawings and will be obvious from the description of the invention. In the drawings, the same reference numbers represent the same or similar elements in the different drawings whenever possible.

Systems and methods consistent with the present invention display information from a Web application on a receiver-end telephone. For purposes of the following description, the systems and methods consistent with the present invention are described with respect to a called party as the receiving-end telephone station. However, the description should be understood to apply in general for either any calling party or called party, because once a telephone conversation is in progress, any of those parties could access the information from a Web application in order to transmit it to the other party (i.e., receiver-end telephone station). Furthermore, the description also applies to cellular telephones that run appropriate software to display information from a Web application.

In order to display information from a Web application on a receiver-end telephone, a first user displays information from a Web application in his transmitting-end telephone. The transmitting-end telephone then sends data corresponding to this information to a receiver-end telephone. The first user accesses the data before placing a call to the user of the receiver-end telephone station or after a call has been placed.

The data corresponding to the accessed information may be the information itself or parts thereof, or the Web site address from which the information can independently be accessed by the receiving-end telephone. When the addresses are sent instead of the information, the second user can navigate the Web application independently of the first user.

To allow the display of information from a Web application on a telephone (either the transmitting-end or receiving-end telephone), that telephone should have a screen that can display text or images from the Web application. Furthermore, the telephone itself does not necessarily run software that enables access to the Web application (e.g., a Web browser). Instead, the telephones are programmed to communicate with a terminal server that runs the Web browser or any other program which enables the telephone to access information from a Web application.

The Web application runs in a Web server. The Terminal server may be connected to the Web server via TCP/IP connection. In terms of the functionality of the system, it is provided that a single terminal server may support many telephone stations so that each user may access information and display it in their telephones via the terminal server. Therefore, a computer is not needed for each user in order to access and display information from a Web application.

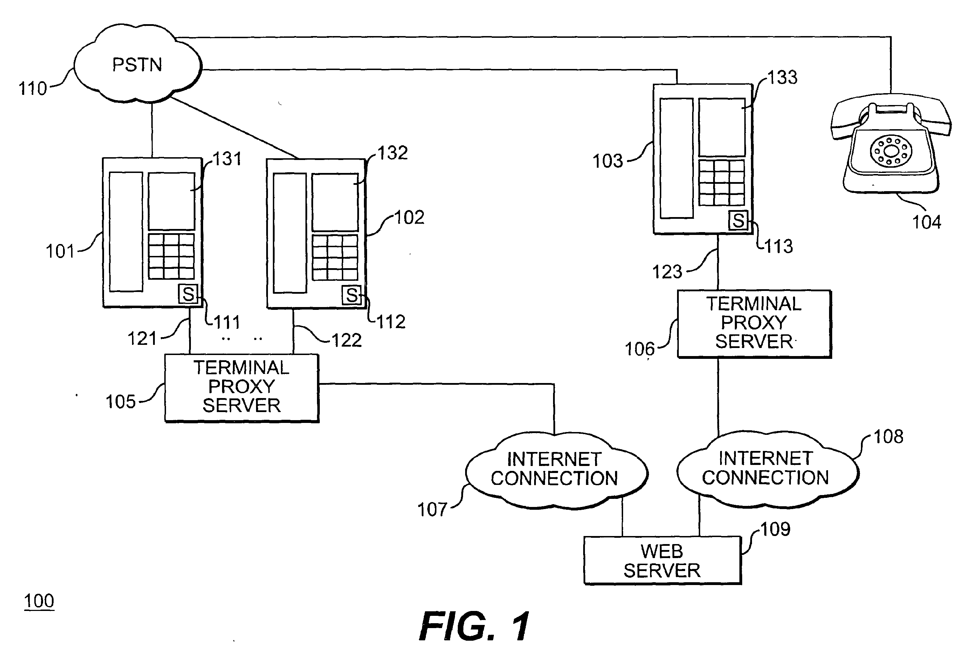

FIG. 1 illustrates a system 100 for displaying information from a Web application on a receiver-end telephone, in accordance with methods and systems consistent with the present invention. The system 100 includes telephone stations 101-104, two terminal proxy servers 105-106, and a Web server 109.

Telephone terminals 101-103 are each capable of displaying information from a Web application by independently accessing the web server 109. The information is provided in the displays 131-133. Telephone 104 is a conventional telephone without the capability of independently accessing a Web application (might be able to display information sent by another telephone but not directly access the Web application).

Telephone terminals 101-103 may be used in place of a personal computer to access Web-based applications. An example of such a telephone is a Nortel Etherset that has appropriate software for accessing software applications, including Web-based applications.

The terminal Proxy servers 105-106 may include a computer that performs most of the functions of a Web browser (e.g., Netscape Navigator) or a similar application that provides for interaction between telephones 101-103 and a remote application. The remote application may be in a remote server such as Web server 109. Web server 109 may include a computer that supports a Web site, as would be understood by a person of ordinary skill in the art. The function of the terminal proxy server is similar to that of a personal computer running a Web browser, where the personal computer is remotely controlled from a transmitting-end telephone unit. By receiving control signals from the transmitting-end telephone the personal computer would in turn access information from a Web application and send accessed images and information to the remote receiving-end telephone.

Telephones 101-104 may communicate among themselves via the Public switched Telephone Network 110 (PSTN). Telephones 101 and 102 may be connected to the terminal proxy server 105 via twisted pair lines 121 and 122. This communication takes place by using communications software installed in each of the telephones 101 and 102 and in the terminal proxy server. The communications software enables the user of the telephones 101-102 to remotely control the browser running in the Terminal Proxy server 105. By controlling the browser, the user can navigate the Web and access and display information from a Web site in the telephone displays 131-132. This information may be produced by an application running in Web server 109.

The communications between terminal proxy server 106 and telephone 103 are carried out in the same manner as the communications between the terminal proxy server 105 and telephones 101-102. The terminal proxy servers 105 and 106 are shown as separate elements in order to illustrate that the users of telephones 101-102, and a user of telephone 103, may be in remote locations. Being in a remote location may imply the need of a separate terminal proxy server to allow the display of information from a Web application in the telephones.

Each of the terminal proxy servers 105 and 106 may be connected to the Web server 109 via Internet connections 107 and 108. The term Internet connection may include the use of the Transmission Control Protocol/Internet Protocol (TCP/IP) to enable communications taking place between two nodes. Because the information is provided in the respective displays 131, 132, and 133 of telephones 101-103, the communications between the terminal proxy servers 105 and 106 would also use hypertext markup language (HTML). HTML is used for writing applications in the Web. It lets the text included in an application contain codes that define fonts, layout, and embedded graphics. Alternatively, the Wireless Markup Language (WML) may be used. WML is a version of HTML that is designed for very small displays.

Telephones 101 and 102 may exchange data and voice via the terminal proxy server 105 instead of the PSTN 110. Similarly, telephone 101 may communicate with telephone 103 by transmitting data that is transported through terminal proxy server 105, Internet connection 107, Web server 109, Internet connection 108, and terminal proxy server 106.

A first scenario may be one where a first user initiates a telephone call from telephone 101. The call is established between telephone 101 and telephone 102. The first user may desire to refer to information from a Web application with which he or she is familiar with during the course of the conversation with the user of telephone 102. The first user initiates communication with the terminal proxy server 105 used to browse the Web application from telephone 101. Information from the Web application running in the Web server 109 shows in display 131 of telephone 101.

After accessing and displaying the information from the Web application in display 131, the first user sends data, corresponding to the accessed information, to telephone 102. It is at this point that telephone 101 serves as the "transmitting-end" telephone, while telephone 102 serves as the "receiving-end" telephone. The transmitting-end telephone 101 sends this data to receiving-end telephone 102 via the PSTN 110.

The first user sends the data corresponding to the accessed information to the receiving-end telephone 102 by pressing a softkey 111 in the transmitting-end telephone 101. This softkey may be included in all of the telephones (softkeys 111-113) that are capable of displaying information from a Web application. When the first user accesses the Web application before initiating a call, the first user may elect to have the transmitting-end telephone automatically send the data to the receiving-end telephone 102 when the call is initiated. The transmitting-end telephone 101 may contain (as part of its software) a routine that enables this feature.

The called party (user of telephone 102) sees the transmitted data displayed in the display 132. Thus, the called party may be able to infer the subject of the conversation that would be held in the event he or she chooses to answer telephone 102. In the event that the called party decides not to answer the call, the calling party may elect to leave a voice mail message referring to the information displayed on the display 131 of transmitting-end telephone 101. In addition to the voice message, the calling party can leave an electronic message in the form of text with the Web site address at which the information referred to in the message can be accessed. Also, a sequence of addresses can be left as a message. Upon listening to a recorder voice message, the information corresponding to the recorded address may be simultaneously provided in display 132 of the receiving-end telephone 102.

The data corresponding to the information provided on display 101 may be, as mentioned above, a Web address. The receiving-end telephone 102 receives this address and forwards this address to terminal proxy server 105 via the line 122. The terminal proxy server uses the browser to access the address in which to find the information in Web server 109. Once the terminal proxy server accesses the information from the Web server 109, the information is transmitted to the receiving-end telephone 102 via the line 122. The receiving-end telephone 102 might then display information that is the same as that displayed in transmitting-end telephone 101.

The data that is sent could also be the information displayed (or parts thereof) itself, rather than the address of the Web server where the information resides. This feature does not make that much of a difference in the situation where the transmitting-end telephone and the receiving-end telephone are both supported by the same terminal proxy server. When the transmitting-end telephone 101 communicates with the telephone 103, however, sending the actual information displayed in the transmitting-end telephone 101 is a very convenient alternative in the event that the terminal proxy server 106 is not operational. The disadvantage of this situation, however, is that the user of the receiver-end telephone may not be able to browse Web server 109 independent of the user of transmitting-end telephone 101.

FIG. 1 further shows a conventional telephone 104. When the transmitting-end telephone 101 communicates with telephone 104, the display unit 131 will reveal a sign (not shown) that the telephone at the other end does not have the capability of displaying information from a Web application, and the softkey 111 will be disabled (only if the transmitting-end telephone 101 and telephone 104 are the only parties in the conversation).

FIG. 2 illustrates a flowchart containing steps for displaying information from a Web application on a receiver-end telephone, in accordance with methods and systems consistent with the present invention. The first step 302 includes establishing a call between two parties. Step 304 includes accessing a Web application from a telephone corresponding to one of the parties. The Web application is accessed by controlling a Web browser running in the terminal proxy server (e.g., 105) from the telephone requesting the access (e.g., transmitting-end telephone 101). The Web browser accesses the Web application running in Web server 109 and retrieves information. Terminal proxy server 105 then forwards this information to the transmitting-end telephone 101.

Step 306 includes displaying the accessed information on the transmitting-end telephone 101. Step 308 includes sending data corresponding to the accessed Web application to the receiver-end telephone 102. As mentioned above, this data may be the information displayed on the transmitting-end telephone 101, or the Web address in which the information displayed can be found.

Step 310 includes displaying information from the Web application on display 132 of the receiving-end telephone 102 (when the data is sent after initiating a telephone call) or recording the data sent by the transmitting-end telephone 101 as an electronic message (when the called party does not answer the telephone). Thus, the receiving-end telephone displays the information from the Web application by either using the Web address to access Web server 109 independent of the transmitting-end telephone 101, or by simply displaying the data received from transmitting-end telephone 101.

The foregoing description of preferred embodiments of the present invention provides an exemplary illustration and description, but is not intended to be exhaustive or to limit the invention to the precise form disclosed. Modifications and variations are possible in light of the above teachings or may be acquired from practice of the invention.

## Claims

1. A method for communication among two or more telephone stations, comprising the steps of:
initiating a telephone call from a first telephone station to a second telephone station;
retrieving information from a computer system;
displaying the retrieved information at the first telephone station; and
transmitting data corresponding to the retrieved information to the second telephone station; and
displaying information at the second telephone station corresponding to the retrieved information.

2. The method of claim 1, wherein the step of displaying information at the second telephone station comprises:
displaying the information in response to an action by an individual.

3. The method of claim 1, wherein the step of displaying information at the second telephone station comprises:
displaying the information in response to selecting an option in the first telephone station.

4. The method of claim 1, wherein the step of transmitting data comprises:
transmitting an address corresponding to the information retrieved from the computer system.

5. The method of claim 1, wherein the step of transmitting data comprises:
transmitting at least some of the information retrieved from the computer system.

6. The method of claim 1, wherein the step of transmitting data comprises:
transmitting the data via a Public Switched Telephone Network.

7. The method of claim 1, wherein the step of transmitting data comprises:
transmitting the data via a computer server.

8. The method of claim 1, further comprising the step of:
leaving an electronic message containing the data transmitted at the second telephone station.

9. The method of claim 8, wherein the step of leaving an electronic message comprises:
leaving an electronic message containing an address corresponding to the information retrieved from the computer system.

10. The method of claim 8, wherein the step of leaving an electronic message comprises:
leaving an electronic message containing a sequence of addresses corresponding to the information retrieved from the computer system.

11. A system for communication among two or more telephone stations, comprising:
a first telephone station containing a display;
a computer system from which information is retrieved and displayed on the first telephone station;
a second telephone station containing a display for displaying information corresponding to the information retrieved from the computer system.

12. The system of claim 11, wherein the computer system comprises:
a terminal server connected to the first and second telephone stations; and
an Internet Web server connected to the terminal proxy server.

13. The system of claim 12, wherein the terminal server runs software that serves as an interface between each of the telephone terminals and the Web server.

14. The system of claim 13, wherein the software is a Web browser.

15. The system of claim 13, wherein the software allows each of the telephone terminals to access a Web application provided by the Web server.

16. The system of claim 11, wherein the information retrieved from the computer system comprises a Web application.

17. The system of claim 11, wherein the information displayed in the second telephone station, corresponding to the information retrieved from the computer system, comprises an address at which the information retrieved can be found.

18. The system of claim 11, wherein the information displayed in the second telephone station, corresponding to the information retrieved from the computer system, comprises at least some portions of the information retrieved.

19. The system of claim 11 further comprising a voice mail system for storing the information corresponding to the information retrieved from the computer system.

20. A computer readable storage medium including a computer program stored thereon for carrying out a process of communication among two or more telephone stations, which process comprises the steps of:
initiating a telephone call from a first telephone station to a second telephone station;
retrieving information from a computer system;
displaying the retrieved information at the first telephone station; and
transmitting data corresponding to the information to the second telephone station; and
displaying information at the second telephone station corresponding to the retrieved information.
